# EUROPEAN PATENT SPECIFICATION

(11) **EP 4 431 379 B1**
(45) Date of publication and mention of the grant of the patent: **28.01.2026**
(21) Application number: 23161675.6
(22) Date of filing: 14.03.2023
(51) Int. Cl.: B63B 35/34

(54) **DEVICE AND SYSTEM FOR FLOATING PHOTOVOLTAICS**
VORRICHTUNG UND SYSTEM FÜR SCHWIMMENDE PHOTOVOLTAIK
DISPOSITIF ET SYSTÈME POUR PHOTOVOLTAÏQUE FLOTTANT

(43) Date of publication of application: 18.09.2024
(73) Proprietor: UNIVERSITETET I AGDER, 4604 Kristiansand S (NO); OsloMet - Storbyuniversitetet, 0167 Oslo (NO); Universidad Politécnica de Madrid, 28040 Madrid (ES)
(72) Inventor: Jiang, Zhiyu, Grimstad (NO); Dai, Jian, Heggedal (NO); Souto-Iglesias, Antonio, Madrid (ES)
(74) Representative: Håmsø Patentbyrå AS

(56) References cited:
- CN-A- 108 069 000
- CN-A- 115 214 854
- KR-A- 20190 138 167
- KR-B1- 101 970 640

## Description

The invention generally relates to floating photovoltaics (FPV). In particular, the invention relates to a porous pontoon for a floatable photovoltaic/solar module, the pontoon having a length, a width and a height, and the pontoon having perforations through-going/penetrating in its height to define a porous structure. The invention also relates to a floatable photovoltaic module including a porous pontoon, to a floating photovoltaic system, and to a method for installing such a floating photovoltaic system.

Floating photovoltaics (FPV) / floating solar, sometimes also referred to as "floatovolta-ics", is solar panels mounted on a structure floating in a water body, such as in a lake or at sea. FPV has received significant attention in recent years due to increased focus on renewable energy. Compared to land-based photovoltaics (PV), FPV has several advantages, including not occupying land, increased efficiency due the natural cooling of solar cells from the surrounding water, easier installation and decommissioning, reduced evaporation from water basins due to partial coverage of surface area and easy tracking, i.e. the possibility to rotate large floating solar installations to optimize solar irradiance without the need for complex and costly mechanical equipment.

However, the cost of installing FPV is still significantly higher than the cost of installing land-based PV. There are also concerns regarding the ability of FPV systems installed at sea to withstand wind loads and large waves, which, until now, has limited the prevalence of FPV installations offshore. Long-term reliability of system components, both due to fatigue from the motion of wind and waves, as well as from salt water, has also been a concern. As such, there is a need for FPV systems with reduced production and installation costs and with improved durability in harsh weather conditions.

KR 20190138167 A discloses a floating photovoltaic system including plurality modular, interconnectable pontoons to create a floating fundament for solar panels. Each pontoon is formed with through-going perforations and with protrusions and recesses around its circumference, where a protrusion on one pontoon is to be inserted into a recess of a similar pontoon to connect them.

KR 101970640 B1 discloses a floating solar power plant, where solar panels are placed on top of floating, upright columns. A plurality of such floating columns is interconnected in a rectangular grid forming a solar power system.

CN 115214854 A discloses a floating solar power plant where a plurality of floating solar modules is interconnected in a grid and moored to the seabed. Each solar module includes a perforated support base plate and a solar panel on top.

The invention has for its object to remedy or to reduce at least one of the drawbacks of the prior art, or at least to provide a useful alternative to prior art.

The object is achieved through features, which are specified in the description below and in the claims that follow.

The invention is defined by the independent patent claims. The dependent claims define advantageous embodiments of the invention.

In a first aspect, the invention relates to a porous pontoon for a floatable photovoltaic (FPV) module, the pontoon having a length, a width and a height, and the pontoon having perforations through-going in its height, wherein the pontoon, around its circumference, is provided with a plurality of recesses, the plurality of recesses being shaped so as to complementarily receive a respective cylindrical float adapted to be connected to and provide buoyancy to the pontoon. The cylindrical recesses allow a tight fit with the floats such that there is minimum wear and a strong connection between the contact surfaces. A better transfer of the loads (moments and forces) between the floats and the pontoon may be achieved as the integrated float may reliably resist large environmental loads from wind and waves.

The perforations may strengthen the out-of-plan flexural rigidity of the porous pontoon and provide air circulation between solar panels and the water surface, and thereby improve cooling of the solar panels. The perforations may also contribute to increasing the pontoon's resistance to heave movement, thus reducing its movement in the body of water in response to wind and waves.

In one embodiment the length and width of the porous pontoon may substantially define a rectangle. By "substantially" is meant that the upper/lower surface of the pontoon may define a rectangle, except from the recesses, where the circumference typically will deviate from straight lines. An advantage of the rectangular shape is that a plurality of pontoons may be stacked on top of each other and fit nicely into a standardised shipping container, thus optimising transport efficiency. In one embodiment, the porous pontoon may have a length in the order of 4 meters and a width in the order of 2.5 meters, preferably around 4.2 times 2.4 meters, whereby a plurality of such pontoons may be stacked on top of each other in a standard 14ft/8ft shipping container. The height of the pontoon may be in the range of 0.1 m to 0.5 m, preferably around 0.3 m. The rectangular shape is also advantageous for optimising the surface area of the porous pontoon with respect to energy production as most commercially available solar panels have rectangular form. With the rectangular shape, material consumption may therefore be minimised, and the costs of transportation and logistics may be significantly reduced. The use of rectangular shape can also contribute to improved economical use of a given sea space for FPV deployment as it enables dense deployment of modules.

According to claim 1, the plurality of recesses is shaped to receive a respective cylindrical float, implying that the recess will be formed as a part of a cylinder, i.e. form a circular arc in the length/width plane. In one embodiment, the pontoon may be provided with six recesses, each shaped to receive a respective cylindrical float. Preferably, the recesses may be evenly and symmetrically distributed around the circumference of the porous pontoon, such as with one recesses in each of the corners of the rectangle and one recess mid-way along each length / longest side of the pontoon. The individual cylinders define a simple geometric shape and may be fabricated at low cost, such as by using a rotational moulding or injection blow moulding technique. If instead a continuous watertight body (with all floats and pontoon included) were used, the moulds would be more complex and more expensive than those of the individual cylinders and pontoon. It is also difficult to maintain a high quality of the products when the geometry is sophisticated. In use, the individual cylinders will be submerged in water with small water-piercing areas, which lead to small wave-induced hydrodynamic loading. If instead one large floating body submerged in water were to be used, the wave loads would be much larger. Also, the individual cylinders may be transported in a space-efficient way.

In one embodiment, the perforations may be formed with a circular cross-section, i.e. the perforations may define internal cylindrical voids in the pontoon. Simulations have shown that the circular shape may lead to a better flow separation and hence damping effect of the pontoon.

In one embodiment, the perforations may account for 10-50% of the total surface area of the pontoon, preferably around 25%, corresponding to a porosity ratio of 0.25. As mentioned above, the perforations have been shown, both numerically and experimentally, to have a positive effect on the behaviour of the pontoon at sea, and in particular to dampen its heave motion in response to wave excitations. The optimal porosity ratio may vary under different set-ups, where a high porosity ratio often will lead to better damping, while having too high porosity ration may compromise the structural integrity of the pontoon as such. A porosity ratio of around 0.25 has been found to a suitable trade-off in most situations.

In one embodiment, the porous pontoon may be made from high-density polyethylene (HDPE).

In a second aspect, the invention relates to a floatable photovoltaic module including a porous pontoon according to the first aspect of the invention, the floatable photovoltaic module further comprising:
- a plurality of floats connected to the pontoon and positioned in respective recesses; and
- one or more photovoltaic panels placed on top of the pontoon.

The floats may be cylinders made from glass fibre-reinforced polymer (GFRP).

In normal use, in still water, the floats will be in contact with water providing sufficient buoyancy to keep the pontoon with the solar panels above the sea level. Even if the pontoon has its own buoyancy, it will not be in contact with the body of water when the water is still. As mentioned above, the reduced contact area with the body of water reduces the wave-induced hydrodynamic loading on the PV module as a whole.

In one embodiment, the floatable photovoltaic module may comprise four photovoltaic panels arranged in a dual pitch arrangement. The dual pitch arrangement, i.e. with two and two solar panels having an identical orientation and inclination, may be useful as a trade-off for optimising power production for a solar module without any tracking or means for orienting the module according to the sun's position in the sky.

Each of the floats may be connected to the pontoon, in its respective recess, by means of a connector/bracket or similar. Each connector may include male and female parts, e.g. fin plates at the connection interface and pins (bolts) and nuts made of, e.g., high strength nylon materials, will be used for the locking mechanism.

In a third aspect the invention relates to an FPV system comprising a grid of interconnected floatable photovoltaic modules according to the second aspect of the invention.

In one embodiment modules in the grid may be connected to four surrounding PV modules. It will be understood that modules centrally positioned in the grid may be connected to four surrounding/neighbouring solar/PV modules. However, solar modules positioned at an edge/perimeter of the grid may be connected to fewer neighbouring solar modules. One or more PV modules provided near an edge/perimeter of the FPV system, may be moored to seabed. In a preferred embodiment the four surrounding PV modules may be diagonally positioned in the grid relative to the PV module to which they are connected and the connections between the PV modules being cruciform connections.

In one embodiment the connections may be made by means of non-compressive, elastic ropes, such as fibre ropes. This means that only axial forces may be acting between the solar modules in the grid. In one embodiment, the ropes may be polyester ropes. Optionally, the rope connections may be pre-tensioned, leading to a tighter connection between the solar modules in the grid.

In a fourth aspect, the invention relates to a method of installing a FPV system according to the third aspect of the invention, where the method includes the steps of:
- towing the floating photovoltaic system as a whole to a production location; and
- mooring the floating photovoltaic system to the seabed.

It may be hugely beneficial to be able to assemble the grid near a shore/quay and subsequently tow it, as a whole, to its location of production where it may be moored to the seabed and/or to a nearby fixed installation.

The main focus of the present disclosure is the mechanical/structural aspects of the invention. Additionally, electrical connections between the floatable photovoltaic solar modules within a floating photovoltaic system according to the invention also need to be provided. Typically, a plurality of floatable photovoltaic modules may be connected in series by means of power cables / floating linkages. If two or more floating photovoltaic systems according to the invention are provided near each other, also the floating photovoltaic systems may be electrically connected to each other. One or more of the floating photovoltaic systems may be electrically connected to a floating transformer. In the following is described an example of a preferred embodiment illustrated in the accompanying drawings, wherein:
- Fig. 1: shows an exploded view of a floatable photovoltaic module according to the invention;
- Fig. 2: shows an embodiment of a floating photovoltaic system according to the invention; and
- Fig. 3: shows, at a smaller scale, an embodiment of a floating photovoltaic system when moored to a seabed.

In the following, reference numeral 1 will be used to denote a porous pontoon according to the first aspect of the invention, whereas reference numerals 10 and 100 will be used to denote a floatable photovoltaic module and floating photovoltaic system according to the second and third aspects of the invention, respectively. Any positional indications refer to the position shown in the figures.

In the figures, same or corresponding elements are indicated by same reference numerals. For clarity reasons, some elements may in some of the figures be without reference numerals. A person skilled in the art will understand that the figures are just principal drawings. The relative proportions of individual elements may also be distorted.

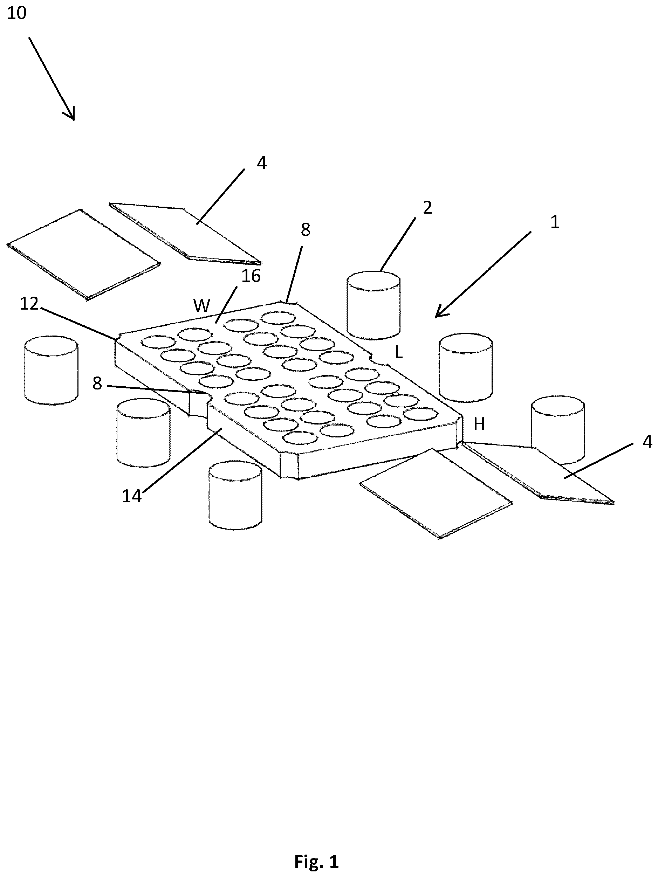

Fig. 1 shows, in an exploded view, an embodiment of a floatable photovoltaic (FPV) module 10 according to the second aspect of the invention. The FPV module 10 includes a porous pontoon 1, according to the first aspect of the invention, six floats 2, in the form of cylinders, and four photovoltaic (PV) panels 4. The porous pontoon 1, hereinafter simply referred to as "the pontoon", has a length L, a width W, and a height H. The length L and width W generally define a rectangle. In the shown embodiment, the length L is approximately 4.2 m, the width W is approximately 2.4 m, while the height H is approximately 0.3 m. The porosity of the pontoon is provided by means of a plurality of perforations 6 though-going in the height H of the pontoon. In the shown embodiment, the perforations have a circular cross-section, thus defining void cylinders internally in the pontoon 1. The pontoon 1 is formed with six recesses 8 around its circumference, the recesses being formed as circular arcs in the horizontal plane, thus complementary and fitting to the circumference of the cylindrical floats 2. One recess 8 is formed in each corner 12, while one recess 8 is also formed mid-way along the long sides 14 of the pontoon.

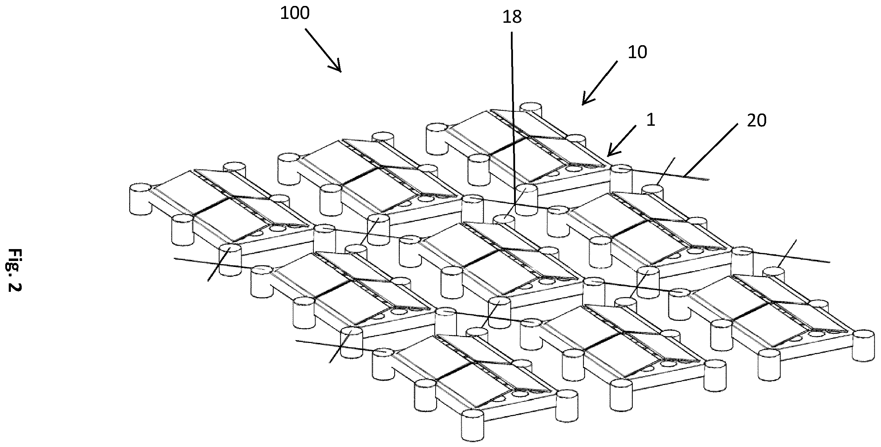

Fig. 2 shows an FPV system 100 according to the third aspect of the invention including a plurality of interconnected, assembled FPV modules 10 according to the second aspect of the invention. Each FPV module 10 includes the PV panels 4 in a dual pitch arrangement, i.e. two and two panels being inclined inwardly from the circumference towards a central portion 16, as indicated in Fig. 2, of the pontoon 1. Means for attaching the cylindrical floats 2 to the pontoon 1 are not shown in detail, but examples of such means were discussed above.

The FPV modules 10 are connected by means of cruciform connections 18 constituted by crossing fibre ropes 20 extending diagonally from the upper corner of one pontoon 1 to the lower corner of a diagonally located neighbouring pontoon 1. In the shown embodiment the fibre ropes 20 are connected to the cylindrical floats 2, or rather to not shown connectors connecting the cylindrical floats 2 to the pontoons 1. The cruciform connections 18 only transfer axial tension, whereby no moments or compressive forces are transferred between the FPV modules 10.

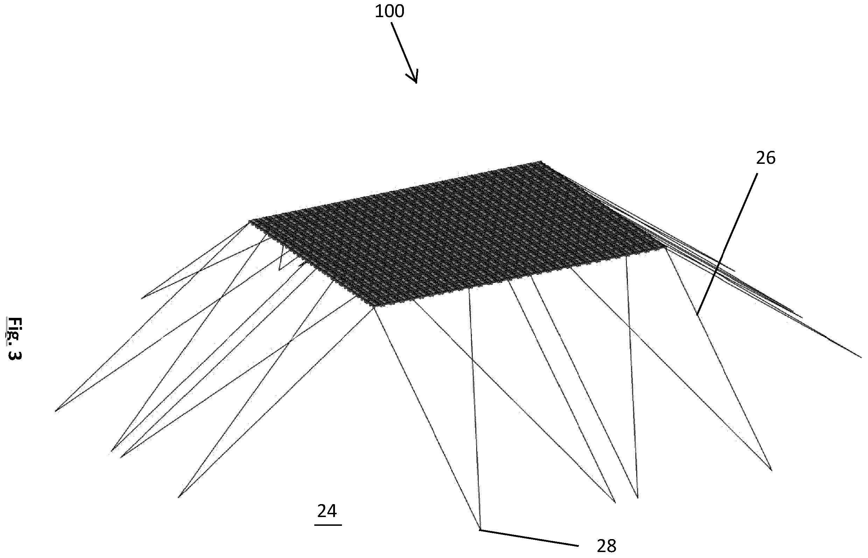

Fig. 3 shows an exemplary FPV system 100 positioned at a desired location of production and moored to a seabed 24 with a plurality of mooring lines 26. The mooring lines are moored to the seabed by means of anchors 28 (highly schematically indicated in the figure), such as suction anchors or piles. As can be seen from the figure, only FPV modules 10 at the perimeter of the FPV system 100 are directly moored to the seabed 24. The remaining FPV modules 10, internally in the grid defining the FPV system 100, are indirectly moored by their interconnection to moored modules 10 in the system 100.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

## Claims

1. Porous pontoon (1) for a floatable photovoltaic module (10), the pontoon (1) having a length (L), a width (W) and a height (H), and the pontoon (1) having perforations (6) through-going in its height (H), wherein the pontoon (1), around its circumference, is provided with a plurality of recesses (8), the plurality of recesses (8) being shaped so as to complementary receive a respective float (2) adapted to be connected to and provide buoyancy to the pontoon (1), **characterised in that** each of the plurality of recesses (8) is shaped to receive a respective cylindrical float (2).

2. Porous pontoon (1) according to claim 1, wherein the length (L) and width (W) of the porous pontoon substantially define a rectangle.

3. Porous pontoon (1) according to claim 2, wherein the length (L) of the porous pontoon (1) is in the order of 4 meters, and the width (W) of the pontoon (1) is in the order of 2.5 meters, preferably around 4.2 times 2.4 meters.

4. Porous pontoon (1) according to any one of the preceding claims, wherein the pontoon (1) is provided with six recesses (8), each shaped to receive a respective cylindrical float (2).

5. Porous pontoon (1) according to claim 4, where four of the recesses (8) are provided in the corners (12) of the rectangle and where two of the recesses are provided mid-way along the length (L, 14) of the pontoon (1).

6. Porous pontoon (1) according to any one of the preceding claims, wherein the perforations (6) are formed with a circular cross-section.

7. Porous pontoon (1) according to any of the preceding claims, wherein the perforations (6) account for 10-50% of the total surface area of the pontoon (1), preferably around 25%.

8. Floatable photovoltaic (10) module including a porous pontoon (1) according to any of the preceding claims, the floatable photovoltaic module (10) further comprising:
- a plurality of floats (2) connected to the pontoon (1) and positioned in respective recess (8); and
- one or more photovoltaic panels (4) placed on top of the pontoon (1).

9. Floatable photovoltaic module (10) according to claim 8, wherein the floatable photovoltaic module (10) comprises four photovoltaic panels (4) arranged in a dual pitch arrangement.

10. Floating photovoltaic system (100) comprising a grid of interconnected floatable photovoltaic modules (10) according to claim 8 or 9.

11. Floating photovoltaic system (100) according to claim 10, wherein photovoltaic modules (10) in the grid are connected to four surrounding photovoltaic modules (10).

12. Floating photovoltaic system (100) according to claim 11, wherein the four surrounding modules (10) are diagonally positioned in the grid relative to the photovoltaic module (10) to which they are connected and wherein the connections between the photovoltaic modules are cruciform connections (18).

13. Floating photovoltaic system (100) according to any of the claims 10-12, wherein the connections are made by means of fibre ropes (20).

14. Method of installing a floating photovoltaic system (100) according to any one of the claims 10-13, where the method includes the steps of:
- towing the floating photovoltaic system (100) as a whole to a production location; and
- mooring the floating photovoltaic system to the seabed (24).

## Patentansprüche

1. Poröser Ponton (1) für ein schwimmfähiges Photovoltaikmodul (10), wobei der Ponton (1) eine Länge (L), eine Breite (W) und eine Höhe (H) aufweist und der Ponton (1) Perforationen (6) aufweist, die durch seine Höhe (H) durchgehen, wobei der Ponton (1) um seinen Umfang mit einer Vielzahl von Aussparungen (8) bereitgestellt ist, wobei die Vielzahl von Aussparungen (8) so geformt ist, dass sie ergänzend einen jeweiligen Schwimmer (2) aufnehmen, der so angepasst ist, dass er mit dem Ponton (1) verbunden wird und ihm Auftrieb bereitstellt, **dadurch gekennzeichnet, dass** jede der Vielzahl von Aussparungen (8) so geformt ist, dass sie einen jeweiligen zylindrischen Schwimmer (2) aufnimmt.

2. Poröser Ponton (1) nach Anspruch 1, wobei die Länge (L) und Breite (W) des porösen Pontons im Wesentlichen ein Rechteck definieren.

3. Poröser Ponton (1) nach Anspruch 2, wobei die Länge (L) des porösen Pontons (1) im Bereich von 4 Metern liegt und die Breite (W) des Pontons (1) im Bereich von 2,5 Metern, vorzugsweise von etwa 4,2 mal 2,4 Metern liegt.

4. Poröser Ponton (1) nach einem der vorstehenden Ansprüche, wobei der Ponton (1) mit sechs Aussparungen (8) bereitgestellt ist, die jeweils einen jeweiligen zylindrischen Schwimmer (2) aufnehmen.

5. Poröser Ponton (1) nach Anspruch 4, in dem vier der Aussparungen (8) in den Ecken (12) des Rechtecks bereitgestellt sind, und wobei zwei der Aussparungen auf halber Strecke entlang der Länge (L, 14) des Pontons (1) bereitgestellt sind.

6. Poröser Ponton (1) nach einem der vorstehenden Ansprüche, wobei die Perforationen (6) mit einem kreisförmigen Querschnitt geformt sind.

7. Poröser Ponton (1) nach einem der vorstehenden Ansprüche, wobei die Perforationen (6) 10-50 % der Gesamtoberfläche des Pontons (1), vorzugsweise etwa 25 % ausmachen.

8. Schwimmfähiges Photovoltaikmodul (10), das einen porösen Ponton (1) nach einem der vorstehenden Ansprüche einschließt, wobei das schwimmfähige Photovoltaikmodul (10) weiter Folgendes umfasst:
- eine Vielzahl von Schwimmern (2), die mit dem Ponton (1) verbunden sind und in jeweiligen Aussparungen (8) positioniert sind; und
- ein oder mehrere Photovoltaikpaneele (4), die oben auf dem Ponton (1) platziert sind.

9. Schwimmfähiges Photovoltaikmodul (10) nach Anspruch 8, wobei das schwimmfähige Photovoltaikmodul (10) vier Photovoltaikpaneele (4) umfasst, die in einer Doppelneigungsanordnung angeordnet sind.

10. Schwimmendes Photovoltaiksystem (100), das ein Netz aus untereinander verbundenen schwimmfähigen Photovoltaikmodulen (10) nach Anspruch 8 oder 9 umfasst.

11. Schwimmendes Photovoltaiksystem (100) nach Anspruch 10, wobei Photovoltaikmodule (10) im Netz mit vier umgebenden Photovoltaikmodulen (10) verbunden sind.

12. Schwimmendes Photovoltaiksystem (100) nach Anspruch 11, wobei die vier umgebenden Module (10) im Netz in Bezug auf das Photovoltaikmodul (10), mit dem sie verbunden sind, diagonal positioniert sind, und wobei die Verbindungen zwischen den Photovoltaikmodule kreuzförmige Verbindungen (18) sind.

13. Schwimmendes Photovoltaiksystem (100) nach einem der Ansprüche 10-12, wobei die Verbindungen anhand von Faserseilen (20) hergestellt werden.

14. Verfahren zum Installieren eines schwimmenden Photovoltaiksystems (100) nach einem der Ansprüche 10-13, wobei das Verfahren folgende Schritte einschließt:
- Schleppen des schwimmenden Photovoltaiksystems (100) als Ganzes zu einem Produktionsstandort; und
- Festmachen des schwimmenden Photovoltaiksystems auf dem Meeresboden (24).

## Revendications

1. Ponton poreux (1) destiné à un module photovoltaïque apte à flotter (10), le ponton (1) présentant une longueur (L), une largeur (W) et une hauteur (H) et le ponton (1) présentant des perforations (6) traversant sur toute sa hauteur (H), dans lequel le ponton (1), autour de sa circonférence, est doté d'une pluralité d'évidements (8), la pluralité d'évidements (8) étant façonnés de manière à recevoir de manière complémentaire un flotteur (2) respectif adapté pour être relié au ponton (1) et fournir une flottaison à celui-ci,
**caractérisé en ce que** chacun de la pluralité d'évidements (8) est façonné pour recevoir un flotteur cylindrique (2) respectif.

2. Ponton poreux (1) selon la revendication 1, dans lequel la longueur (L) et la largeur (W) du ponton poreux définissent sensiblement un rectangle.

3. Ponton poreux (1) selon la revendication 2, dans lequel la longueur (L) du ponton poreux (1) est de l'ordre de 4 mètres et la largeur (W) du ponton (1) est de l'ordre de 2,5 mètres, de préférence environ 4,2 x 2,4 mètres.

4. Ponton poreux (1) selon l'une quelconque des revendications précédentes, dans lequel le ponton (1) est doté de six évidements (8), chacun étant façonné pour recevoir un flotteur cylindrique (2) respectif.

5. Ponton poreux (1) selon la revendication 4, où quatre des évidements (8) sont prévus dans les coins (12) du rectangle et où deux des évidements sont prévus à mi-chemin le long de la longueur (L, 14) du ponton (1).

6. Ponton poreux (1) selon l'une quelconque des revendications précédentes, dans lequel les perforations (6) sont formées avec une section transversale circulaire.

7. Ponton poreux (1) selon l'une quelconque des revendications précédentes, dans lequel les perforations (6) représentent 10 à 50 % de la superficie totale du ponton (1), de préférence environ 25 %.

8. Module photovoltaïque apte à flotter (10) incluant un ponton poreux (1) selon l'une quelconque des revendications précédentes, le module photovoltaïque apte à flotter (10) comprenant
en outre :
- une pluralité de flotteurs (2) reliés au ponton (1) et positionnés dans un évidement (8) respectif ; et
- un ou plusieurs panneaux photovoltaïques (4) placés au sommet du ponton (1).

9. Module photovoltaïque apte à flotter (10) selon la revendication 8, dans lequel le module photovoltaïque apte à flotter (10) comprend quatre panneaux photovoltaïques (4) agencés dans un agencement à double pas.

10. Système photovoltaïque flottant (100) comprenant un réseau de modules photovoltaïques aptes à flotter interconnectés (10) selon la revendication 8 ou la revendication 9.

11. - Système photovoltaïque flottant (100) selon la revendication 10, dans lequel des modules photovoltaïques (10) dans le réseau sont reliés à quatre modules photovoltaïques (10) environnants.

12. - Système photovoltaïque flottant (100) selon la revendication 11, dans lequel les quatre modules (10) environnants sont positionnés en diagonale dans le réseau par rapport au module photovoltaïque (10) auquel ils sont reliés et dans lequel les liaisons entre les modules photovoltaïques sont des liaisons cruciformes (18).

13. Système photovoltaïque flottant (100) selon l'une quelconque des revendications 10 à 12, dans lequel les liaisons sont faites au moyen de cordes en fibre (20).

14. Procédé d'installation d'un système photovoltaïque flottant (100) selon l'une quelconque des revendications 10 à 13, où le procédé inclut les étapes consistant à :
- remorquer le système photovoltaïque flottant (100) dans son ensemble vers un emplacement de production ; et
- amarrer le système photovoltaïque flottant au fond marin (24).
